# EUROPÄISCHE PATENTANMELDUNG

(11) **EP 2 213 814 A2**
(43) Veröffentlichungstag der Anmeldung: **04.08.2010**
(21) Anmeldenummer: 10000430.8
(22) Anmeldetag: 18.01.2010
(51) Int. Cl.: E04F 21/04

(54) **Verfahren zur Herstellung von Stuck**

(30) Priorität: 29.01.2009 DE 102009006734
(71) Anmelder: Stöckl, Konstantin, 94357 Konzell (DE)
(72) Erfinder: Stöckl, Konstantin, 94357 Konzell (DE)
(74) Vertreter: advotec.

(57) **Zusammenfassung**

Die vorliegende Erfindung betrifft ein Verfahren zur Herstellung von Stuck, wobei mit Hilfe einer musterbildenden Vorrichtung in die noch nicht ausgehärtete Stuckmasse ein versenktes Relief eingebracht wird. Die vorliegende Erfindung betrifft ferner einen Stuck, welcher ein versenktes Relief aufweist.

## Beschreibung

Die vorliegende Erfindung betrifft ein Verfahren zur Herstellung von Stuck.

Verfahren zur Herstellung von Stuck sind aus dem Stand der Technik seit langem bekannt. Stuck besteht in der Regel im Wesentlichen aus Stuckgips, welcher mit Wasser und feinem Sand zu einem plastischen Brei angerührt wird. Ferner kann Kalk in der Stuckmasse enthalten sein. Zur Herstellung von Stuckprofilen und geraden Zierleisten wird die Stuck-masse in der Regel auf den rauen bzw. aufgerauten, angenässten Putzgrund aufgetragen. Anschließend wird der Stuckmasse mit einer Schablone die gewünschte Form gegeben. Dabei wird ein Formgebungsprofil zunächst mit einer zumeinst aus Holz gefertigten Grobschablone gezogen. Dann wird der Feinstuck mit einer Blechschablone nachgeformt. Dazu wird die Schablone in einem einzigen Arbeitsgang durchgezogen, damit keine Absätze im Profil sichtbar werden. In weiteren Arbeitsgängen kann eine zusätzliche Glättung vorgenommen werden, bis der gewünschte Endzustand erreicht ist.

Es können jedoch nicht nur Profile und gerade Zierleisten, sondern auch freie Formen, wie beispielsweise floraler Dekor, freie Formen, etc. hergestellt werden. Hierzu wird zunächst eine Form hergestellt. Anschließend wird die Stuckmasse in die Form eingefüllt und getrocknet. Der so hergestellte Stuck wird anschließend beispielsweise an einer Wand oder Decke befestigt. Bei diesem Stuckherstellungsverfahren werden Hoch-, Halb- oder Flachreliefs erzeugt. Diese Reliefs zeichnen sich dadurch aus, dass die Formen (z.B. Figuren, Blumen, etc.) aus der Ebene hervortreten.

Der vorliegenden Erfindung liegt die Aufgabe zugrunde, ein neuartiges Verfahren zur Herstellung von Stuck zur Verfügung zu stellen, mit welchem neue, bisher nicht dagewesene Stuckformen hergestellt werden können.

Diese Aufgabe wird gelöst durch ein Verfahren zur Herstellung von Stuck, wobei mit Hilfe einer musterbildenden Vorrichtung in die noch nicht ausgehärtete Stuckmasse ein versenktes Relief eingearbeitet wird.

Beim versenkten Relief, einer Sonderform der altägyptischen Kunst, bleiben die "Leerflächen" an der Oberfläche stehen, während die Figuren versenkt in die Oberfläche eingearbeitet sind. Es ist bislang aus dem Stand der Technik kein Stuck bekannt, welcher ein derartiges Relief aufweist.

Vorzugsweise ist die musterbildende Vorrichtung eine Rolle, auf deren Oberfläche erhabene Bereiche angeordnet sind, welche die Form des gewünschten Reliefmusters aufweisen, wobei die Rolle über die noch nicht ausgehärtete Stuckmasse gerollt wird. Die hierzu benutzte Rolle kann einen Griff aufweisen und die Form einer herkömmlichen Malerrolle haben. Es ist jedoch bevorzugt, dass die Rolle keinen Griff aufweist und per Hand, insbesondere durch Festhalten an der Rollenachse über die noch nicht ausgehärtete Stuckmasse geführt wird. Beim Rollen der musterbildenden Rolle über die noch nicht ausgehärtete Stuckmasse drücken die erhabenen Bereiche das Muster in die Stuckmasse. Dadurch entsteht das gewünschte versenkte Relief.

Ganz besonders bevorzugt ist die musterbildende Vorrichtung im Wesentlichen aus einem nicht saugenden, nicht porösen Material gefertigt. So kann die musterbildende Vorrichtung beispielsweise aus Gummi gefertigt sein. Dadurch wird gewährleistet, dass die Stuckmasse beim Einbringen des Musters durch die musterbildende Vorrichtung nicht an dieser haften bleibt. Zudem wird erreicht, dass die erhabenen Bereiche der musterbildenden Vorrichtung das gewünschte Muster in der Stuckmasse hinterlassen können. Auch ist es wichtig, dass das Material der musterbildenden Vorrichtung nicht zu hart ist, da ansonsten ebenfalls die Stuckmasse durch die musterbildende Vorrichtung beim Einbringen des versenkten Reliefes "mitgenommen" wird.

Mit Vorteil wird die musterbildende Vorrichtung vor dem Arbeitseinsatz mit Tensidlösung, vorzugsweise wässrige Spülmittellösung behandelt. Zahlreiche Untersuchungen und Versuche haben ergeben, dass besonders saubere und genaue Reliefs erzeugt werden können, wenn die musterbildende Vorrichtung, insbesondere eine musterbildende Gummirolle, vor dem Arbeitseinsatz ca. 2-3 Tage in eine wässrige Spülmittellösung eingelegt wird. Die so behandelte musterbildende Vorrichtung (Rolle) nimmt beim Eindrücken des Reliefs in die Stuckmasse kaum Material auf, so dass extrem feine und saubere Stucke herstellbar sind.

Bei einer bevorzugten Verfahrensvariante weist der zu bearbeitende Rohstuck eine Schichtdicke auf, die mindestens der Höhe der erhabenen Bereiche auf der Oberfläche der musterbildenden Vorrichtung entspricht. Dadurch wird verhindert, dass die erhabenen Bereiche der musterbildenden Vorrichtung beim Eindringen des Reliefs in die Stuckmasse diese lediglich wegdrücken und so zu einem unsauberen Muster führen. Entspricht die Schichtdicke der Stuckmasse dagegen mindestens der Höhe der erhabenen Bereiche auf der Oberfläche der musterbildenden Vorrichtung wird gewährleistet, dass die erhabenen Bereiche komplett in die Stuckmasse eingedrückt werden können und so ein sauberes versenktes Relief erzeugen.

Bei einer bevorzugten Variante des erfindungsgemäßen Verfahrens enthält die Stuckmasse Stuckgips sowie mindestens eine weitere Komponente, ausgewählt aus der Gruppe, bestehend aus Haftputz und Fischmehl, wobei der Stuckgips und die mindestens eine weitere Komponente vorzugsweise im Verhältnis von ca. zehn Teilen Stuckgips zu einem Teil weiterer Komponente vorliegen. Untersuchungen haben gezeigt, dass eine derartig zusammengesetzte Stuckmasse besonders varieilhaft beim Erzeugen eines versenkten Reliefs ist. Noch vorteilhafter ist es, wenn die Stuckmasse ein Tensid, vorzugsweise Spülmittel enthält. So bleibt eine Stuckmasse, welche neben Stuckgips und Haftputz auch Spülmittel enthält, so gut wie nicht an einer musterbildenden Rolle hängen, wenn diese über die Stuckmasse gerollt wird. Dadurch entstehen besonders saubere und feine versenkte Reliefs.

Bei einer bevorzugten Variante des erfindungsgemäßen Verfahrens werden transportable Stuckbahnen hergestellt, wobei wie folgt vorgegangen wird:
- Stuckmasse (z.B. Stuckgips + Haftputz im Verhältnis 10:1) wird in eine Form (z.B. längliche Bahn) eingebracht;
- Abziehen der Oberfläche;
- Abspülen der glätten Oberfläche mit wässriger Spülmittellösung;
- Bearbeitung mit musterbildender Rolle, in dem diese über die glatte Oberfläche der Stuckmasse (Rohstuck) gerollt wird;
- Trocknen lassen an der Luft.

Bei einer weiteren Verfahrensvariante wird eine Wand und/oder eine Decke mit Stuckmasse beaufschlagt und anschließend mit der musterbildenden Vorrichtung bearbeitet.

Die vorliegende Erfindung betrifft ferner einen Stuck, welcher ein versenktes Relief aufweist und insbesondere nach dem erfindungsgemäßen Verfahren herstellbar ist.

Der Stuck kann beispielsweise in Form von transportablen Platten varliegen. Diese Platten können beispielsweise vom Herstellungsort an den Einsatzort transportiert werden und dort an der gewünschten Stelle (z.B. Wand) befestigt, insbesondere geklebt werden.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein. In den Zeichnungen zeigen:
- Fig. 1:: eine musterbildende Rolle zur Durchführung des erfindungsgemäßen Verfahrens;
- Fig. 2:: ein Ausschnitt aus einem versenkten Relief, hergestellt mit der Rolle von Fig. 1.

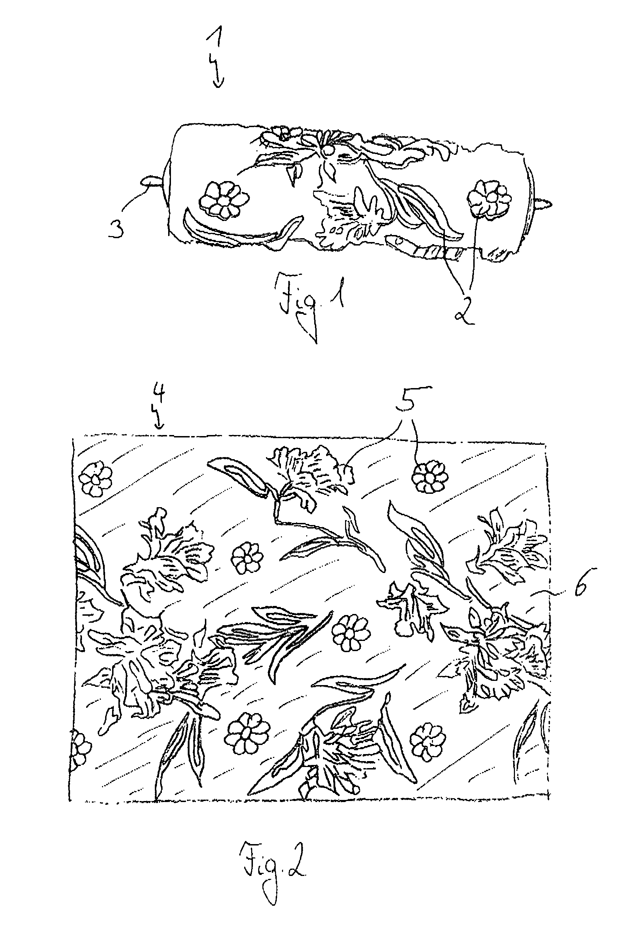

Fig. 1 zeigt eine musterbildende Rolle 1 zur Durchführung des erfindungsgemäßen Verfahrens. Die Rolle 1 besteht aus Gummi. Die Rolle 1 weist erhabene Bereiche 2 auf, welche teilweise die Form von Blüten aufweisen. An beiden Seiten der Rolle 1 ragen Stifte 3 aus der Rolle 1 heraus, welche Verlängerungen der Rollenachse darstellen. Diese Stifte 3 dienen zum Greifen der Rolle beim Herstellen eines versenkten Reliefs. Durch den direkten Kontakt mit der verlängerten Rollenachse durch die Stifte 3 kann eine Bedienperson den Druck der Rolle 1 auf eine zu bearbeitende Stuckmasse besonders gut dotieren.

Vor dem Arbeitseinsatz wird die Rolle 1 ca. 2-3 Tage in eine wässrige Spülmittellösung eingelegt. Anschließend wird die Rolle auf eine glatt gestrichene, zu bearbeitende Stuckmasse aufgelegt und unter leichtem Druck über den Rohstuck geführt. Dabei drücken sich die erhabenen Bereiche 2 in die weiche Stuckmasse ein.

Fig. 2 ist ein Ausschnitt aus einem versenkten Relief 4, welches mit Hilfe der musterbildenden Rolle 1 geschaffen wurde. Das Relief 4 zeigt versenkte Bereiche 5 neben "Leerflächen" 6, die an der Oberfläche stehen. Die Form der versenkten Bereiche 5 entspricht der Form der erhabenen Bereiche 2 der musterbildenden Rolle 1. Das Relief 4 ist in der vorliegenden Darstellung in eine transportable Stuckbahn eingearbeitet. Nach dem Trocknen der Stuckmasse kann diese je nach Wunsch lackiert, bemalt oder anderweitig bearbeitet werden.

## Patentansprüche

1. Verfahren zur Herstellung von Stuck, wobei mit Hilfe einer musterbildenden Vorrichtung (1) in die noch nicht ausgehärtete Stuckmasse ein versenktes Relief (4) eingebracht wird.

2. Verfahren nach Anspruch 1, **dadurch gekennzeichnet, dass** die musterbildende Vorrichtung (1) eine Rolle ist, auf deren Oberfläche erhabene Bereiche (2) angeordnet sind, welche die Form des gewünschten Reliefmusters (5) aufweisen, wobei die Rolle über die noch nicht ausgehärtete Stuckmasse geführt wird.

3. Verfahren nach einem der Ansprüche 1 oder 2, **dadurch gekennzeichnen, dass** die musterbildende Vorrichtung im Wesentlichen aus einem nicht saugenden, nicht porösen Material gefertigt ist.

4. Verfahren nach einem der vorhergehenden Ansprüche, **dadurch gekennzeichnet, dass** die musterbildende Vorrichtung (1) vor dem Arbeitseinsatz mit einer Tensidlösung, vorzugsweise Spülmittellösung, behandelt wird.

5. Verfahren nach einem der vorhergehenden Ansprüche, **dadurch gekennzeichnet, dass** der zu bearbeitende Rohstuck eine Schichtdicke aufweist, die mindestens der Höhe der erhabenen Bereiche 2 auf der Oberfläche der musterbildenden Vorrichtung (1) entspricht.

6. Verfahren nach einem der vorhergehenden Ansprüche, **dadurch gekennzeichnet, dass** die Stuckmasse Stuckgips sowie mindestens eine weitere Komponente, ausgewählt aus der Gruppe, bestehend aus Haftputz und Fischmehl, enthält, wobei der Stuckgips und die mindestens eine weitere Komponente vorzugsweise im Verhältnis von ca. 10 Teilen Stuckgips zu einem Teil weiterer Komponente vorliegen.

7. Verfahren nach einem der vorhergehenden Ansprüche, **dadurch gekennzeichnet, dass** die Stuckmasse ein Tensid, vorzugsweise Spülmittel enthält.

8. Verfahren nach einem der vorhergehenden Ansprüche, **dadurch gekennzeichnet, dass** zur Herstellung von transportablen Stuckbahnen wie folgt vorgegangen wird:
- Stuckmasse (z.B. Stuckgips + Haftputz im Verhältnis 10:1) wird in eine Form (z.B. längliche Bahn) eingebracht;
- Abziehen der Oberfläche;
- Abspülen der glatten Oberfläche mit wässriger Spülmittellösung;
- Bearbeitung mit musterbildender Rolle (1), indem diese über die glatte Oberfläche der Stuckmasse (Rohstuck) gerollt wird;
- Trocknenlassen an der Luft.

9. Verfahren nach einem der Ansprüche 1 bis 7, wobei eine Wand und/oder eine Decke mit Stuckmasse beaufschlagt wird und anschließend mit der musterbildenden Vorrichtung (1) bearbeitet wird.

10. Stuck, aufweisend ein versenktes Relief, insbesondere hergestellt nach einem Verfahren nach einem der Ansprüche 1 bis 9.
